# EUROPEAN PATENT APPLICATION

(11) **EP 2 236 587 A1**
(43) Date of publication of application: **06.10.2010**
(21) Application number: 09157210.7
(22) Date of filing: 02.04.2009
(51) Int. Cl.: C10L 5/44, C10J 3/66, C10B 53/02

(54) **Modified bio-slurry and process for its production and gasification**

(71) Applicant: General Electric Company, Schenectady, NY 12345 (US)
(72) Inventor: Fritz, Jassin, 80997 München (DE)
(74) Representative: Szary, Anne Catherine

(57) **Abstract**

The subject-matter disclosed herein relates to a modified bio-slurry comprising pyrolysis condensate and a combustible which does not originate from pyrolysis of biomass. Furthermore, a process for modifying a bio-slurry, and a process for gasifying a modified bio-slurry are described.

## Description

### FIELD OF INVENTION

The subject matter disclosed herein relates to a modified bio-slurry and a process for gasification of a modified bio-slurry. Furthermore, the subject-matter disclosed herein relates to a process of modifying a bio-slurry. In particular, the herein disclosed products and processes relate to bio-slurries that include pyrolysis condensate.

### BACKGROUND OF THE INVENTION

The utilization of biomass for power generation or for the generation of a liquid fuel is becoming of increasing interest due to uncertainties in oil and gas supplies, due to an interest in energetic utilization of organic waste, and due to the goal of reducing CO₂ emissions.

Since liquid and gaseous energy sources are preferred for power generation for technical reasons, biomass often needs to be converted before being utilizable in combustion chambers.

As a pretreatment of biomass, pyrolysis can be applied. Pyrolysis is a process for the conversion of organic materials by heating in the absence of oxygen. In particular, flash or fast pyrolysis can be used for pyrolysis of biomass. Flash or fast pyrolysis may include rapid heating of biomass particles, and subsequent rapid cooling and depositing of the products.

The products obtained by pyrolysis of biomass may be pyrolysis gas, pyrolysis char, and pyrolysis condensate.

A bio-slurry can be generated from pyrolysis condensate which originates from pyrolysis of biomass. Such a bio-slurry may further include pyrolysis char also originating from pyrolysis of biomass. Said bio-slurry can be gasified in a gasifier. Gasification is a well known process with the principal aim to convert carbonaceous material into a gas mixture typically called syngas. Syngas may include varying amounts of carbon monoxide and hydrogen, and can be used as a fuel.

The composition of the pyrolysis condensate depends on the primary biomass, their humidity and the pyrolysis process, and the pyrolysis condensate may have a significant content of water. This water fraction reduces the heating value of the pyrolysis condensate. A pyrolysis condensate with a large water fraction is further undesired, because it tends to be unstable and separate an aqueous solution of oxygen containing organic compounds with a high water content. This may lead to an inhomogeneous pyrolysis condensate with a separated water fraction and a bio-oil fraction with a low water content.

Although gasifiers such as entrained flow gasifiers are a well proven and reliable technology for gasification of a fuel such as coal, there are several challenges when gasifying pyrolysis condensate or a bio-slurry. For example, safety problems may occur, if a gasifier such as an entrained flow gasifier is fed with pyrolysis condensate or is fed with a bio-slurry comprising pyrolysis condensate that originates from the pyrolysis of biomass. Due to the above described tendency of separation, the gasifier may temporarily be fed with pyrolysis condensate or a bio-slurry with a very high water content. Depending on e.g. the primary biomass employed, said pyrolysis condensate with a very high water content may only have a low content of organic compounds. Accordingly, oxygen present in the gasifier may temporarily not be consumed since temporarily not enough organic material would be available for gasification. These conditions may lead to an excess of oxygen. Such an excess of oxygen, in mixture with syngas of a preceding gasification, may temporarily lead to the risk of an explosion in the gasifier. Since the composition of the pyrolysis condensate and accordingly the composition of the bio-slurry can vary depending on e.g. the primary biomass used or the storage, it may not reliably be determined whether the above risk may occur or not.

In DE 10345672 A1, a process for gasifying pyrolysis condensate is described, wherein pyrolysis condensate is fractionated in a fluid organic phase and a fluid water phase. According to DE 10345672 A1, a risk of explosion may be reduced when a continuous injection of the fluid organic phase into the gasifier is performed. Accordingly, this treatment requires the additional steps of fractionating the pyrolysis condensate, and injecting the remaining fluid water phase separately at the gasifier. Furthermore, separate transport and storage of the separated phases of the pyrolysis condensate is required.

### BRIEF DESCRIPTION OF THE INVENTION

In view of the above, a modified bio-slurry according to independent claim 1, a process for gasification of a modified bio-slurry according to independent claim 7 and a process for production of a modified bio-slurry according to independent claim 9 are provided.

Further aspects, advantages, details and features of the present invention are apparent from the dependent claims, the description and the accompanying drawing.

A full and enabling disclosure of the subject-matter disclosed herein, including the best mode thereof, to one of ordinary skill in the art, is set forth more particularly in the remainder of the specification, including reference to the accompanying figure.

### BRIEF DESCRIPTION OF THE DRAWING

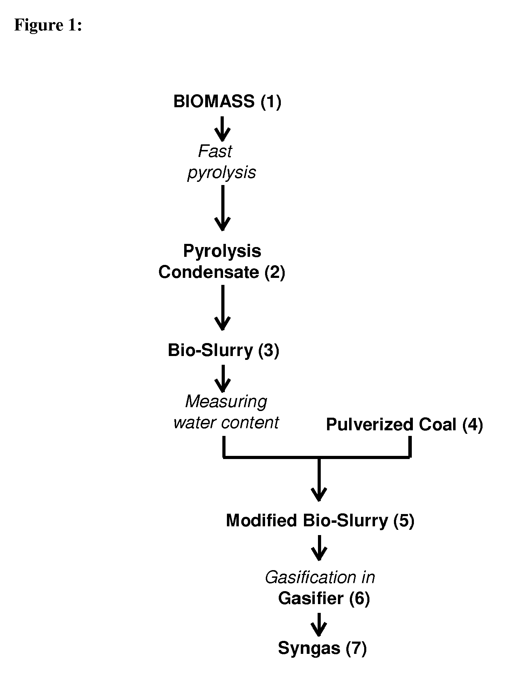

FIG. 1 is a flowchart of one embodiment of a process as disclosed herein.

### DETAILED DESCRIPTION OF THE INVENTION

Reference will now be made in detail to the various aspects and embodiments of the subject-matter disclosed herein, one example of which is illustrated in figure 1. Each example is provided by way of explanation of the subject-matter disclosed herein, and is not meant as a limitation of the invention. For example, features illustrated or described as part of one embodiment can be used on or in conjunction with other embodiments to yield yet a further embodiment. It is intended that the present invention includes such modifications and variations.

According to a first aspect, a modified bio-slurry comprising pyrolysis condensate, and a combustible which does not originate from pyrolysis of biomass is disclosed.

In one embodiment of the modified bio-slurry as disclosed herein, the combustible is in pulverized form.

In another embodiment of the modified bio-slurry as disclosed herein, the combustible is coal.

In a further embodiment of the modified bio-slurry as disclosed herein, the pyrolysis condensate originates from pyrolysis of biomass.

In yet a further embodiment of the modified bio-slurry, the modified bio-slurry comprises pyrolysis condensate in an amount of from about 1 to about 99% by weight, preferably of from about 20 to about 90% by weight, and a combustible which does not originate from pyrolysis of biomass in an amount of from about 1 to about 80% by weight, preferably of from about 10 to about 70% by weight.

In still a further embodiment of the modified bio-slurry, the modified bio-slurry consists of pyrolysis condensate, a combustible that does not originate from pyrolysis of biomass, and optionally water and/or one or more additives.

Still another aspect of the subject-matter disclosed herein relates to a process for the gasification of a modified bio-slurry, wherein the process comprises injecting the modified bio-slurry into a gasifier and gasifying the modified bio-slurry in said gasifier.

In another embodiment of the process for gasification of a modified bio-slurry, the process further comprises prior to or after the gasification of the modified bio-slurry, gasification of a bio-slurry and/or gasification of a coal-slurry, and/or gasification of a second modified bio-slurry, which has a different composition compared to the modified bio-slurry, in said gasifier.

Another aspect of the subject-matter disclosed herein relates to a process for production of the modified bio-slurry disclosed herein, wherein a combustible which does not originate from pyrolysis of biomass is added to a bio-slurry which comprises pyrolysis condensate.

In one embodiment of the process for production of a modified bio-slurry as disclosed herein, the process further comprises: measuring with one or more sensors the composition and/or heating value of the pyrolysis condensate and/or the composition of the bio-slurry before and/or after the combustible is added to the bio-slurry.

In a further embodiment of the process for production of a modified bio-slurry as disclosed herein, the process further comprises: measuring with one or more sensors the water content of the pyrolysis condensate and/or the water content of the bio-slurry before and/or after the combustible is added to the bio-slurry.

In another embodiment of the process for production of a modified bio-slurry, the amount of added combustible is regulated depending on the measured composition of the pyrolysis condensate, and/or the composition of the bio-slurry before and/or after the combustible is added to the bio-slurry.

In still another embodiment of the process for production of a modified bio-slurry, the combustible is added in form of a slurry including the combustible, wherein said slurry including the combustible preferably is a coal-slurry.

In another embodiment, the process for production of a modified bio-slurry further comprises the regulation of the water content of the slurry including the combustible before adding the slurry to the bio-slurry dependent on the measured composition of the pyrolysis condensate, and/or the composition of the bio-slurry and/or the water content of the bio-slurry.

In a further embodiment of the process for production of a modified bio-slurry, the amount of added combustible is regulated depending on the measured composition of the pyrolysis condensate, and/or the composition of the bio-slurry before and/or after the combustible is added to the bio-slurry.

In yet another embodiment of the process for production of a modified bio-slurry, the amount of added combustible is further regulated depending on the desired oxygen consumption in the gasifier, and/or water content and/or heating value of the modified bio-slurry.

Another aspect of the subject-matter disclosed herein relates to the use of the modified bio-slurry as disclosed herein and/or the process for production and/or gasification of a modified bio-slurry in an Integrated-Gasification-Combined-Cycle (IGCC) plant that works with co-production of liquid fuels, in an IGCC plant that works without co-production of liquid fuels, in a Biomass-to-Liquids plant or in a Coal-to-Liquids Plant.

It goes without saying that all weight-percentage ranges specified in the present application sum up to 100 %.

The term biomass as used herein is loosely used to cover many renewable energy sources and may refer to all kinds of biomass such as organic waste of animal or plant origin, or other materials such as wood and tree based materials, forest residues, agricultural residues and energy crops. The wood and tree materials and forest residues may include wood, woodchips, saw dust, bark or other such products from trees, straw, grass, and the like. Agricultural residue and energy crops may further include short rotation herbaceous species, husks such as rice husk, coffee husk, etc., maize, corn stover, oilseeds, residues of oilseed extraction, and the like. The oilseeds may be typical oil bearing seeds like soybean, camolina, canola, rapeseed, corn, cottonseed, sunflower, safflower, olive, peanut, and the like. Organic waste of animal origin may for example include animal fat, manure, meat and bone meal. As further examples plant material such as straw, foliage, and/or hay may be referred to as biomass. Furthermore, used tires and domestic waste, which may be contaminated by paper, board, or plastic material, etc. may be referred to as biomass. Furthermore, material obtained from agro-processing industries such as the oil industry, may be referred to as biomass. Thus, biomass can include a deoiled residue after extraction of oil from the oil seeds. These could be, for example, a deoiled soybean cake, deoiled cottonseed, deoiled peanut cake, and the like. The feedstock can include the gum separated from the vegetable oil preparation process- e.g. lecithin in the case of soybean. Gums are polysaccharides of natural origin, capable of causing a large viscosity increase in solution. Other types of gums, such as agar, dammar gum, Arabic gum, which may not be derived from oils, but directly from plants, may also be used as biomass. The biomass may also include non-seed parts of trees that bear oil - coconut, palm, avocado, and the like. The biomass may include inedible varieties like linseed, castor, and the like. The biomass may also include other tree-based products such as shells, e.g., coconut shell, almond shell, walnut shell, sunflower shell, and the like. Cellulosic fibers like coconut, jute, and the like, may also constitute all or part of biomass. The biomass may also include algae, microalgae, and the like. It could also include agro-products after preliminary processing. As an example, this might include feedstocks such as bagasse (obtained after juice removal from sugarcane), cotton gin trash, and the like. Thus, the biomass as used herein includes materials that are formed as a result of photosynthesis. Thus, although a closed set, biomass involves a number of species. These species differ widely in various constituents, calorific value, physical characteristics and other features. As an illustration, the ash content in rice husk can be about 15-25%, but is only about 2% or less in wood. The moisture content of wood varies from about 10-60%, depending on the source, while the moisture content of groundnut shells is about 2-3%. The calorific value of these biomasses also differs widely - e.g. the heating value of wood varies between about 10-20 MJ/kg, that of rice husk varies between about 13-14 MJ/kg, while that of bagasse is between about 8 -10 MJ/kg. Biomass may be pre-treated by grinding the biomass into fine particles. Moreover, the biomass may be dried before the conversion. However, the term biomass as used herein does not include fossil fuels, such as coal, brown coal, crude oil, natural gas, etc.

The modified bio-slurry as disclosed herein includes pyrolysis condensate, and a further combustible which does not originate from pyrolysis of biomass. Since the further combustible does not originate from pyrolysis of biomass, the availability of said combustible does not depend on the availability of biomass or on the availability of the products of pyrolysis of biomass. Addition of the further combustible to a bio-slurry may lower the water content of the bio-slurry. Furthermore, addition of the further combustible can increase the heating value of the bio-slurry. Accordingly, a modified bio-slurry can be tailored to compensate variations of the heating value and the water content of a non-modified bio-slurry. Thus, the risk of feeding the gasifier suddenly only with pyrolysis condensate with a high water content may be reduced when gasifying a modified bio-slurry.

Said combustible that does not originate from pyrolysis of biomass may be a material in pulverized form. The term pulverized thereby includes material with an average particle size of less than required for the gasification in an entrained flow gasifier. For example, the particle size may be less than 1000 µm, or in some embodiments less than 500 µm, or in some embodiments less than 100 µm. In some embodiments, said particle size may be more than 10 µm, or even more then 50 µm. The combustible typically has a heating value of from 5 MJ/kg to 40 MJ/kg, or in some embodiments of from 25 MJ/kg to 40 MJ/kg.

The combustible which does not originate from pyrolysis of biomass may originate from a fossil fuel. For example, the combustible may be coal, or in some embodiments pulverized coal. In other embodiments, the combustible may be brown coal or pulverized brown coal. The combustible may also be coke or pulverized coke originating from fossil fuels such as coal or brown coal. For the gasification in an entrained flow gasifier coal is typically used at present. Accordingly, coal may typically be used as a combustible which does not originate from pyrolysis of biomass in order to obtain the modified bio-slurry as disclosed herein.

Since the availability of the combustible that does not originate from pyrolysis of biomass does not depend on the availability of biomass or on the availability of the products of pyrolysis of biomass, the combustible, or a slurry that contains the combustible can be added in any amount to a bio-slurry in order to obtain a modified bio-slurry as disclosed herein.

Pyrolysis condensate may originate from any kind of pyrolysis of biomass such as fast pyrolysis, or flash pyrolysis of biomass. In some embodiments fast pyrolysis of biomass may be performed to obtain pyrolysis condensate. In some embodiments, flash pyrolysis may be performed to treat biomass. Fast or flash pyrolysis of biomass is a well known technique from the state of the art. The term pyrolysis may refer to the heating of biomass, typically in the absence of any oxygen or in the presence of sub-stoichiometric oxygen. Fast pyrolysis of biomass includes the rapid heating of biomass up to the reaction temperature, typically between 400°C and 600°C and all sub-ranges there between, in some embodiments between 450°C and 550°C, preferably around 500°C.

By flash or fast pyrolysis of biomass, pyrolysis gas, pyrolysis char and pyrolysis condensate may be obtained. The particular proportion of each of these products can vary significantly since it depends on the composition of the primary biomass as well as on the pyrolysis process. For example, the pyrolysis condensate can typically be up to about 50 to about 80 % by weight of the pyrolysis products and all sub-ranges there between, and the pyrolysis char can typically be between about 5 to about 30 % by weight of the pyrolysis products and all sub-ranges there between. In one embodiment of the process as disclosed herein, the pyrolysis gas obtained by pyrolysis of biomass may be used as a heat source for the flash pyrolysis itself.

Flash and/or fast pyrolysis can be performed decentralized. For example, flash and/or fast pyrolysis may be performed at one site and modification of the bio-slurry and/or gasification of the modified bio-slurry may be performed at another site or other sites. Dependant on the primary biomass, the pyrolysis products can have a higher energy density than the primary biomass (e.g. in case of straw) and transport costs may be reduced. Also the logistics for the transport of large amounts of biomass may be simplified.

The composition and properties of the primary biomass used for pyrolysis may be different. For example, the humidity of the primary biomass can vary significantly. In addition, a variation in the pyrolysis process and the parameters used for pyrolysis may lead to different compositions of the pyrolysis products obtained.

The pyrolysis condensate contains a number of organic compounds. Depending on the primary biomass and their humidity, pyrolysis condensate may include a varying amount of water. Moreover the pyrolysis condensate may include a variety of organic compounds with a certain heating value. Such further compounds may be for example methanol, pyrolysis lignin, organic acids such as acidic acid, and/or phenols.

Since the availability of the further combustible does not depend on the availability of the biomass or products obtained by pyrolysis of biomass, the further combustible can be added in any desired amount in order to obtain a modified bio-slurry. A modified bio-slurry may have a lower water content compared to the unmodified bio-slurry.

In some embodiments, the modified bio-slurry consists of pyrolysis condensate, a combustible which does not originate from pyrolysis of biomass, and optionally water and/or one or more additives. In some embodiments, the modified bio-slurry comprises from about 1 to about 99% by weight pyrolysis condensate and all sub-ranges there between. In some embodiments, the modified bio-slurry comprises from about 20 to about 90% by weight pyrolysis condensate and all sub-ranges there between. In some embodiments, the modified bio-slurry comprises a combustible which does not originate from pyrolysis of biomass from about 1 to about 80% by weight. In some embodiments, the modified bio-slurry comprises a combustible which does not originate from pyrolysis of biomass from about 10 to about 70% by weight. In some embodiments, the modified bio-slurry consists of about 30 to about 90 % by weight pyrolysis condensate, of about 10 to about 70 % by weight of a combustible which does not originate from pyrolysis of biomass, and optionally of water and/or one or more additives. In some embodiments, the modified bio-slurry consists of about 50 to about 70 % by weight pyrolysis condensate, of about 30 to about 50 % by weight combustible which does not originate from pyrolysis of biomass, and optionally of water and/or one or more additives.

In another aspect of the subject-matter disclosed herein, the modified bio-slurry is gasified in a gasifier. Accordingly, the subject-matter as disclosed herein includes the gasification of a modified bio-slurry. To this, the modified bio-slurry may be compressed and injected into the gasifier. For example, gasification may be performed in an entrained flow gasifier. Gasifiers such as entrained flow gasifiers are well known from the state of the art.

Accordingly, an aspect of the subject-matter as disclosed herein includes a process for gasification of the modified bio-slurry as disclosed herein. Said process includes injecting the modified bio-slurry into a gasifier and the gasification of the modified bio-slurry in said gasifier.

This process for gasification of the disclosed modified-bio-slurry may further comprise the gasification of a bio-slurry in said gasifier prior to or after the gasification of the modified bio-slurry. A bio-slurry differs from a modified-bio-slurry in that the bio-slurry does not include a combustible which does not originate from biomass and/or pyrolysis of biomass. Hence, the process for gasification of a modified bio-slurry as disclosed herein allows the continuous or discontinuous switching from gasification of a bio-slurry to the gasification of a modified bio-slurry and vice versa.

The process may also comprise the gasification of one or more second modified bio-slurries in said gasifier prior to or after the gasification of the modified bio-slurry, wherein the second modified bio-slurries have a different composition compared to the modified bio-slurry. For example, the second modified bio-slurries may have a higher fraction of pyrolysis condensate compared to the modified bio-slurry. Alternatively, the one or more second modified bio-slurries may have a lower fraction of pyrolysis condensate. However, the one or more second modified bio-slurries typically comprise pyrolysis condensate and the combustible that does not originate from biomass in the same percentage ranges as described herein for the modified bio-slurry.

The process for gasification of a modified bio-slurry as disclosed herein may also comprise the gasification of a coal-slurry in said gasifier prior to or after the gasification of the modified bio-slurry and/or the one or more second modified bio-slurries. The term coal-slurry as used herein may refer to all slurries including fossil fuels such as coal, brown coal, etc. A coal-slurry may further have a water content. The fossil fuel in the coal-slurry may be in pulverized form. However, the term coal-slurry as used herein does not refer to slurries including a combustible originating from biomass and/or pyrolysis of biomass. Hence, the process for gasification of a modified bio-slurry as disclosed herein allows the switching from gasification of a modified bio-slurry and/or from the gasification of one or more second modified bio-slurries to the gasification of a coal-slurry and vice versa.

Moreover, the process for gasification of a modified bio-slurry as disclosed herein even allows the continuous or discontinuous switching from gasification of a bio-slurry to the gasification of a modified bio-slurry and/or of one or more second modified bio-slurries and further to the gasification of a coal-slurry and vice versa.

For example, if biomass and accordingly slurries including pyrolysis condensate originating from pyrolysis of biomass are of only limited availability, the process for gasification of a modified bio-slurry as disclosed herein allows the switching from gasification of a modified bio-slurry to the gasification of a second modified bio-slurry having a higher content of a combustible which does not originate from biomass and a lower content of pyrolysis condensate compared to the modified bio-slurry. This switching enables to compensate for the lower availability of biomass and of its derivates, like pyrolysis condensate and/or pyrolysis char. In case of an even lower availability of biomass and of its derivates, the process for gasification of a modified bio-slurry as disclosed herein even allows to switch from gasification of a modified bio-slurry to the gasification of a coal slurry. This switching enables to compensate for the lower availability of biomass and of its derivates, like pyrolysis condensate and/or pyrolysis char. Since the one or more second modified bio-slurries may differ only slightly in composition compared to the modified bio-slurry, continuous switching to second modified bio-slurries including increasing fractions of the combustible which does not originate from pyrolysis of biomass is possible. Hence, this process for gasification of a modified bio-slurry as disclosed herein allows one to continuously switch from gasification of a bio-slurry via gasification of a modified bio-slurry and/or gasification of one or more second modified bio-slurries to the gasification of a coal-slurry.

In addition, the process for gasification of a modified bio-slurry as disclosed herein allows varying the amount of the combustible which does not originate from pyrolysis of biomass with the objective to compensate variations in the composition and/or water content of the modified bio-slurry. Varying the amount of the combustible which does not originate from pyrolysis of biomass may thereby be achieved by metering a coal-slurry to a bio-slurry and/or to a modified bio-slurry. Such a metering may be performed by co-feeding the gasifier with a coal slurry and a bio-slurry and/or a modified bio-slurry. Depending on the composition of the bio-slurry and/or of the modified bio-slurry, variations of said composition may be compensated for by varying the amount of added or co-fed coal slurry and or by adjusting the water content and/or coal content of said coal-slurry prior to its addition or co-feeding.

The physical properties of the modified bio-slurry may be varied by additional means. For example, the viscosity of the modified bio-slurry may be varied by preheating the modified bio-slurry. Moreover the ash content of the biomass may vary significantly, and biomass may include ashes with high fusion temperatures. Accordingly it may be desired to use additives (e.g. silicon dioxide (SiO₂)) to ensure the proper operation of a gasifier, such as a slagging gasifier. By adding SiO₂, the melting temperature of the slag may be lowered. To adjust the properties of the slag also limestone can be added.

A further aspect of the subject-matter as disclosed herein includes a process for production of a modified bio-slurry as disclosed herein. The process for production of a modified bio-slurry thereby may include adding a combustible that does not originate from pyrolysis of biomass to a bio-slurry which comprises pyrolysis condensate. Alternatively, production of a modified bio-slurry may be performed by mixing pyrolysis condensate and a further combustible that does not originate from pyrolysis of biomass.

In some embodiments, the process as disclosed herein may further include measuring of the composition of the pyrolysis condensate, or of the composition of the bio-slurry before and/or after the combustible is added. Said measuring may be performed with one or more sensors. The measuring may provide information about the water content of the measured materials. Said information about the water content may be used in order to regulate the amount of combustible added. Accordingly, the water content of the modified bio-slurry may be less than the water content of the bio-slurry before adding the combustible. Accordingly, the water content of the modified bio-slurry may be decreased to any value below the initially measured water content of the bio-slurry by adding the combustible to the bio-slurry. In some embodiments of the process as disclosed herein, measuring may provide further information on the composition of the pyrolysis condensate, or of the composition of the bio-slurry before and/or after the combustible is added. For example, measuring may provide information on the heating value, the components, temperature, etc. of the measured materials.

In other embodiments of the process for production of a modified bio-slurry, the combustible which does not originate from pyrolysis of biomass is added in the form of a slurry including said combustible. For example, such a slurry may be a coal-slurry as described herein. Before adding said slurry or coal-slurry to the bio-slurry in order to produce a modified bio-slurry, the composition and/or heating value and/or water content of said slurry or coal-slurry may be measured. Measuring may thereby be performed by using one or more sensors.

A modification of the bio-slurry can help to reduce the risk of explosion in a gasifier by avoiding phases of reduced oxygen consumption when gasifying the modified bio-slurry. A modified bio-slurry as disclosed herein may accordingly have a sufficiently low amount of water and/or a sufficiently high amount of material which can be gasified.

In some embodiments the conditions in the gasifier may be measured. The measured conditions in the gasifier may provide information on the oxygen content in the gasifier, the load condition in the gasifier, and/or the amount of combustible material in the gasifier. Depending on the conditions measured in the gasifier, the amount of a combustible added to the bio-slurry may be regulated.

The modified bio-slurry as disclosed herein, and/or the herein disclosed process for gasification of a modified bio-slurry and/or the herein disclosed process for production of a modified bio-slurry may be used in a plant. Said plant may be an IGCC plant with or without co-production of liquid fuels, a Biomass-to-Liquids plant or a Coal-To-Liquids plant, which are well known from the state of the art.

In one embodiment of the modified bio-slurry as disclosed herein the added combustibles shall avoid an excess of oxygen and thus help to reduce the risk of an explosion. Accordingly, no additional means for performing a fractionating are required. Furthermore, no separate injection of fractionated phases of a pyrolysis condensate is required. This may reduce the complexity of the gasifier.

An exemplary process for gasification of a modified bio-slurry is shown in Fig. 1. Biomass 1 is treated by fast pyrolysis in order to obtain pyrolysis condensate 2. Pyrolysis condensate 2 is used to generate a bio-slurry 3. Measuring of the water content of the bio-slurry 3 is performed in order to regulate the amount of pulverized coal 4 metered to the bio-slurry 3 to generate a modified bio-slurry 5. The modified bio-slurry 5 is gasified in a gasifier 6 which leads to the production of syngas 7.

This written description uses examples to disclose the invention, including the best mode, and also to enable any person skilled in the art to practice the invention, including performing any incorporated methods. While the invention has been described in terms of various specific embodiments, those skilled in the art will recognize that the invention can be practiced with modification within the spirit and scope of the claims. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A modified bio-slurry comprising pyrolysis condensate, and a combustible which does not originate from pyrolysis of biomass.

2. The modified bio-slurry according to claim 1, wherein the combustible is in pulverized form.

3. The modified bio-slurry according to any of the preceding claims, wherein the combustible is coal.

4. The modified bio-slurry according to any of the preceding claims, wherein the pyrolysis condensate originates from pyrolysis of biomass.

5. The modified bio-slurry according to any of the preceding claims, wherein the modified bio-slurry comprises pyrolysis condensate in an amount of from about 1 to about 99% by weight, preferably of from about 20 to about 90% by weight, and a combustible which does not originate from pyrolysis of biomass in an amount of from about 1 to about 80% by weight, preferably of from about 10 to about 70% by weight.

6. The modified bio-slurry according to any of the preceding claims, wherein the modified bio-slurry consists of pyrolysis condensate, a combustible that does not originate from pyrolysis of biomass, and optionally water and/or one or more additives.

7. A process for the gasification of a modified bio-slurry according to any of claims 1 to 6, wherein the process comprises injecting the modified bio-slurry into a gasifier and gasifying the modified bio-slurry in said gasifier.

8. The process for gasification of a modified bio-slurry according to claim 7, wherein the process further comprises prior to or after the gasification of the modified bio-slurry, gasification of a bio-slurry, and/or gasification of a coal-slurry, and/or gasification of a second modified bio-slurry, which has a different composition compared to the modified-bio-slurry, in said gasifier.

9. A process for production of the modified bio-slurry according to any of claims 1 to 6, wherein a combustible which does not originate from pyrolysis of biomass is added to a bio-slurry which comprises pyrolysis condensate.

10. The process of claim 9, wherein the process further comprises: measuring with one or more sensors the composition and/or heating value of the pyrolysis condensate and/or the composition of the bio-slurry before and/or after the combustible is added to the bio-slurry.

11. The process of any of claims 9 or 10, further comprising: measuring with one or more sensors the water content of the pyrolysis condensate and/or the water content of the bio-slurry before and/or after the combustible is added to the bio-slurry.

12. The process of any of claims 9 to 11, wherein the amount of added combustible is regulated depending on the measured composition of the pyrolysis condensate, and/or the composition of the bio-slurry before and/or after the combustible is added to the bio-slurry.

13. The process of any of claims 9 to 12, wherein the combustible is added in form of a slurry including the combustible, wherein said slurry including the combustible preferably is a coal-slurry.

14. The process of claim 13, wherein the process further comprises the regulation of the water content of the slurry including the combustible before adding the slurry to the bio-slurry dependent on the measured composition of the pyrolysis condensate, and/or the composition of the bio-slurry and/or the water content of the bio-slurry.

15. Use of the modified bio-slurry according to any of claims 1 to 6 and/or the process according to any of claims 7 to 14 in an IGCC plant that works with co-production of liquid fuels, in an IGCC plant that works without co-production of liquid fuels, in a Biomass-to-Liquids plant or in a Coal-to-Liquids Plant.
